# EUROPÄISCHE PATENTSCHRIFT

(11) **EP 1 721 091 B1**
(45) Veröffentlichungstag und Bekanntmachung des Hinweises auf die Patenterteilung: **30.12.2009**
(21) Anmeldenummer: 05707251.4
(22) Anmeldetag: 08.02.2005
(51) Int. Cl.: F16H 57/00

(54) **EINRICHTUNG ZUM VERHINDERN DES TAUMELNS DER SUMMENRÄDER IN EINEM GETRIEBE MIT ZWEI VORGELEGEWELLEN**
DEVICE FOR PREVENTING WOBBLING OF THE PICK-UP GEARS IN A GEARBOX WITH TWO LAYSHAFTS
DISPOSITIF DESTINE A EMPECHER L'OSCILLATION DES PIGNONS TOTALISATEURS DANS UNE BOITE DE VITESSES A DEUX ARBRES DE RENVOI

(30) Priorität: 03.03.2004 DE 102004010270
(43) Veröffentlichungstag der Anmeldung: 15.11.2006
(73) Patentinhaber: ZF Friedrichshafen AG, 88038 Friedrichshafen (DE)
(72) Erfinder: BADER, Josef, 88045 Friedrichshafen (DE)
(86) Internationale Anmeldenummer: PCT/EP2005/001233
(87) Internationale Veröffentlichungsnummer: WO 2005/085681

(56) Entgegenhaltungen:
- EP-A- 0 361 686
- DE-A1- 3 708 100
- US-A- 5 257 543
- PATENT ABSTRACTS OF JAPAN Bd. 009, Nr. 029 (M-356), 7. Februar 1985 (1985-02-07) -& JP 59 175672 A (AISHIN SEIKI KK), 4. Oktober 1984 (1984-10-04)

## Beschreibung

Die vorliegende Erfindung betrifft eine Einrichtung zum Verhindern des Taumelns der auf der Hauptwelle angeordneten Summenräder in einem Getriebe mit zwei Vorgelegewellen gemäß dem Oberbegriff des Patentanspruchs 1.

Nach dem Stand der Technik werden bei Getrieben mit zwei Vorlegewellen die als Summenräder dienenden Losräder radial in den beiden Verzahnungen der Vorlegewellen geführt. In axialer Richtung sind die Summenräder durch Anlaufscheiben auf der Hauptwelle geführt, wobei eine Anlaufscheibe des Losrades zwischen zwei auf der Hauptwelle angeordneten Anlaufscheiben angeordnet ist. Hierbei entsteht der Nachteil, dass durch Fertigungstoleranzen und die zur Ölschmierung erforderlichen Spalte relativ große Spiele entstehen, so dass, wenn die Massen der Losräder auf Grund von Taumelbewegungen der Hauptwelle oder Drehschwingungen angeregt werden, ein unangenehmes Rasselgeräusch entsteht.

Im Rahmen der EP 0361 686 A1 wird für ein Getriebe mit einer Vorgelegewelle vorgeschlagen, das auf der Vorgelegewelle angeordnete Zahnrad der Antriebskonstante derart auf der Vorgelegewelle anzuordnen, dass durch ein dadurch entstehendes kleines Spiel sowie durch ein mit dem Zahnrad verbundenes parallel zur Vorgelegewelle angeordnetes Dämpfungselement, welches einen Teil der Vorgelegewelle umhüllt, die Schwingungen des Zahnrades nicht auf die Vorgelegewelle übertragen werden, um auf diese Weise das Rasselgeräusch möglichst zu unterdrücken. Diese Konstruktion erweist sich als aufwendig; zudem können die Rasselgeräusche nicht vollständig unterdrückt werden, da die weiteren auf der Vorgelegewelle angeordneten Räder mit den entsprechenden Losrädern der Abtriebswelle ohne weitere konstruktive Maßnahmen in Eingriff stehen.

Die DE 3708100 offenbart eine Einrichtung gemäß dem Oberbegriff des Anspruchs 1.

Der vorliegenden Erfindung liegt die Aufgabe zugrunde, eine Einrichtung zum Verhindern des Taumelns der auf der Hauptwelle angeordneten Summenräder bzw. zum Verhindern des erwähnten Rasselgeräusches in einem Getriebe mit zwei Vorgelegewellen anzugeben.

Diese Aufgabe wird durch die Merkmale des Patentanspruchs 1 gelöst.
Weitere Ausgestaltungen und Vorteile gehen aus den Unteransprüchen hervor.

Demnach wird vorgeschlagen, bei der axialen Führung der Summenräder neben der zwischen zwei auf der Hauptwelle angeordneten Anlaufscheiben anordbaren Anlaufscheibe des Summenrades eine weitere Scheibe vorzusehen, welche fest mit dem Summenrad verbunden ist und sich an der Stirnseite der Verzahnung der Vorgelegewellen oder der Zwischenwelle für den Rückwärtsgang abstützt. Hierbei ist vorgesehen, dass das Summenrad mittels Federwirkung gegen die Scheibe gedrückt bzw. geschoben wird. Hierbei kann für jedes Summenrad eine Scheibe vorgesehen sein; es ist auch denkbar, einzelne Summenräder mit der erfindungsgemäßen Scheibe zu versehen.

Im Rahmen einer ersten besonders vorteilhaften Ausführungsform der Erfindung ist vorgesehen, dass die Scheibe federnd ausgebildet ist, wobei auch weitere Möglichkeiten möglich sind. So ist beispielsweise im Rahmen einer zweiten Ausführungsform vorgesehen, dass die Scheibe mittels zumindest eines durch das Summenrad geführten Bolzens mit dem Summenrad verbunden ist, wobei der Bolzen über eine vorgesehene Feder das Rad in Richtung der Scheibe schiebt. Gemäß der Erfindung sind für jedes Rad drei Bolzen vorgesehen, deren Anzahl kann aber entsprechend den Anforderungen variieren. Anstelle von Bolzen können weitere geeignete Befestigungseinrichtungen eingesetzt werden.

Der Winkel zwischen dem der Vorgelegewelle bzw. der Zwischenwelle für den Rückwärtsgang zugewandten Ende der erfindungsgemäßen Scheibe und dem Lot der Vorgelegewelle bzw. der Zwischenwelle für den Rückwärtsgang in radialer Richtung beträgt vorzugsweise in etwa 3°, kann aber auch weitere Werte sowie den Wert Null annehmen (in diesem Fall ist die Scheibe senkrecht zur Welle angeordnet) . . Ein kleiner Winkel resultiert in dem Vorteil, dass eine Berührlinie entsteht, wobei gleichzeitig die Wirkung eines Schmierkeils begünstigt wird. Ferner sind die Kontaktbereiche in der Nähe des Wälzkreises gelegt, wodurch die Gleitanteile in vorteilhafter Weise möglichst gering gehalten werden.

Durch die erfindungsgemäße Konzeption wird ein Taumeln der Summenräder weitgehend verhindert, indem sich diese über die angefederten Scheiben an den gelagerten Vorgelegewellen bzw. den Zwischenwellen für den Rückwärtsgang abstützen.

Die Erfindung wird im folgenden anhand der beigefügten Zeichnung beispielhaft näher erläutert. Es stellen dar.
- Fig. 1: eine Darstellung einer Ausführungsform der Einrichtung, bei der die Summenräder mit den Verzahnungen der Vorgelegewellen kämmen;
- Fig. 2: eine Darstellung einer Ausführungsform der erfindungsgemäßen Einrichtung, bei der die Summenräder mit den Verzahnungen der Vorgelegewellen kämmen und
- Fig. 3: eine Darstellung einer besonders vorteilhaften Ausführungsform der erfindungsgemäßen Einrichtung am Beispiel der Zwischenwellen für die Rückwärtsgänge.

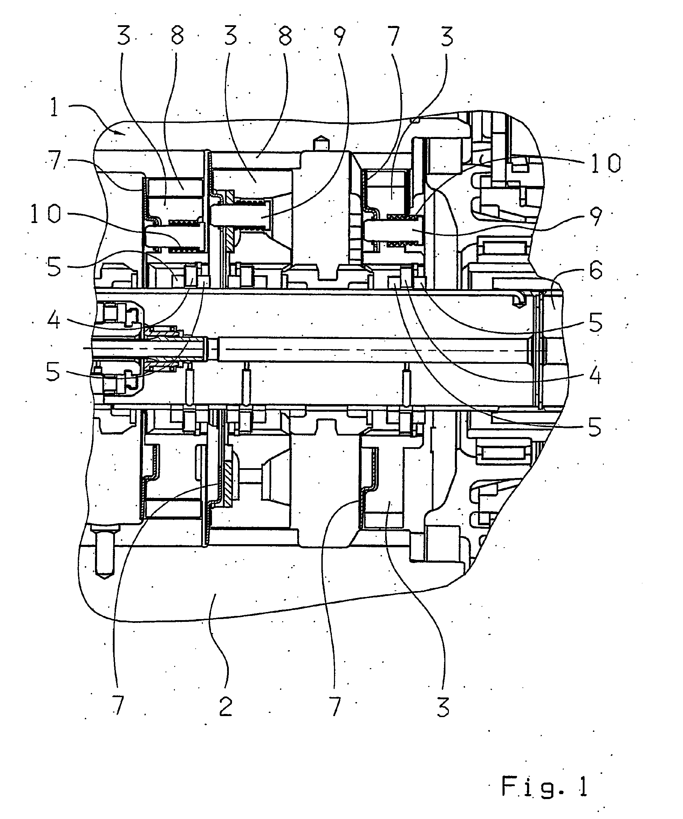

In den Figuren sind nur die erfindungswesentlichen Teile mit Bezugszeichen versehen. In Fig. 1 ist ein Teil eines Getriebes mit zwei Vorgelegewellen 1, 2 dargestellt, wobei die Summenräder 3 radial jeweils in den beiden Verzahnungen der Vorlegewellen 1, 2 geführt sind. In axialer Richtung sind die Summenräder durch Anlaufscheiben 4, 5 auf der Hauptwelle 6 geführt, wobei eine Anlaufscheibe 4 eines Summenrades 3 zwischen zwei auf der Hauptwelle 6 angeordneten Anlaufscheiben 5 angeordnet ist.

Gemäß der Erfindung ist zur Vermeidung von Rasselgeräuschen für jedes Summenrad 3 eine weitere Scheibe 7 vorgesehen, welche einerseits mit dem jeweiligen Summenrad 3 verbunden ist und sich andererseits an der Stirnseite der Verzahnung 8 der Vorgelegewellen 1, 2 abstützt. In vorteilhafter Weise wird das Summenrad 3 mittels Federwirkung gegen die Scheibe 7 gedrückt bzw. geschoben, so dass Taumelbewegungen unterdrückt werden.

Bei dem in der Fig. 1 gezeigten Ausführungsbeispiel ist die Scheibe 7 mittels eines durch das Summenrad 3 geführten Bolzens 9 mit dem Summenrad 3 verbunden, wobei der Bolzen 9 über eine vorgesehene Feder 10 das Summenrad 3 in Richtung der Scheibe 7 schiebt. Diese Konstruktion kann auch für den Fall des Summenrades, welches mit den jeweils auf einer Zwischenwelle angeordneten Zwischenrädern für die Rückwärtsgänge kämmt, angewandt werden.

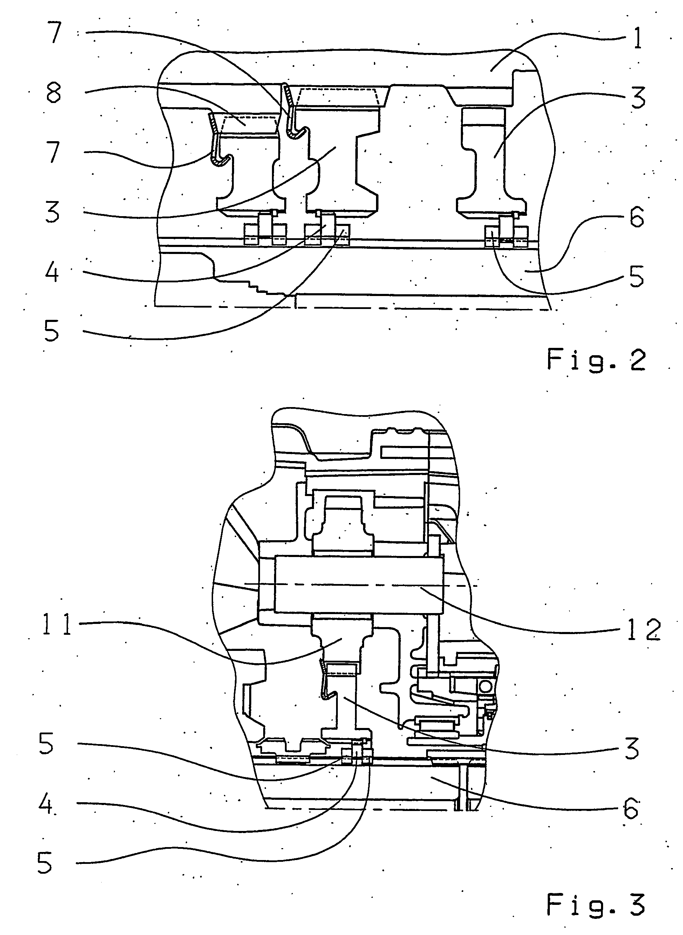

Das Ausführungsbeispiel gemäß Fig. 2 zeigt eine weitere Ausgestaltung der erfindungsgemäßen Scheibe 7. Hierbei ist die Scheibe 7 federnd ausgebildet, so dass Bolzen und Feder gemäß dem Ausführungsbeispiel nach Fig. 1 nicht benötigt werden.

In Fig. 3 ist die erfindungsgemäße Konzeption am Beispiel des Summenrades 3 , welches mit den jeweils auf einer Zwischenwelle 12 angeordneten Zwischenrädern 11 für die Rückwärtsgänge in Eingriff steht, veranschaulicht. Hierbei ist die Scheibe 7 federnd ausgebildet.

Selbstverständlich fällt auch jede konstruktive Ausbildung, insbesondere jede räumliche Anordnung der Räder, der Scheibe 7 bzw. des Federelementes an sich sowie zueinander und soweit technisch sinnvoll, unter den Schutzumfang der vorliegenden Ansprüche ohne die Funktion der Einrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Vorgelegewelle
- 2: Vorgelegewelle
- 3: Summenrad, Losrad
- 4: Anlaufscheibe
- 5: Anlaufscheibe
- 6: Hauptwelle
- 7: Scheibe
- 8: Verzahnung
- 9: Bolzen
- 10: Feder
- 11: Zahnrad für den Rückwärtsgang
- 12: Zwischenwelle für den Rückwärtsgang

## Patentansprüche

1. Einrichtung zum Verhindern des Taumelns der auf der Hauptwelle (6) angeordneten Summenräder (3) in einem Getriebe mit zwei Vorgelegewellen (1,2), **dadurch gekennzeichnet , dass** sie für zumindest eines der Summenräder eine Scheibe (7) umfasst, welche einerseits mit dem jeweiligen Summenrad (3) verbunden ist und sich andererseits an der Stirnseite der Verzahnung (8) der Vorgelegewellen (1, 2) bzw. der Zwischenwellen (12) für die Rückwärtsgänge abstützt, wobei das jeweilige Summenrad (3) mittels Federwirkung gegen die Scheibe (7) geschoben wird und die Kontaktflächen zwischen der Scheibe (7) und der Verzahnung der Vorgelegewelle (1, 2) bzw. der Zwischenwelle (12) für den Rückwärtsgang kegelig ausgebildet sind.

2. Einrichtung nach Anspruch 1, **dadurch gekennzeichnet , dass** die Scheibe (7) federnd ausgebildet ist.

3. Einrichtung nach Anspruch 1, **dadurch gekennzeichnet , dass** die Scheibe (7) mittels zumindest eines durch das Summenrad (3) geführten Bolzens (9) mit dem Summenrad (3) verbunden ist, wobei der Bolzen (9) über eine vorgesehene Feder (10) das Summenrad (3) in Richtung auf die Scheibe (7) schiebt.

4. Einrichtung nach Anspruch 3, **dadurch gekennzeichnet , dass** zur Befestigung der Scheibe mit dem Summenrad (3) drei Bolzen (9) vorgesehen sind.

5. Einrichtung nach einem der vorangehenden Ansprüche, **dadurch gekennzeichnet , dass** der Winkel zwischen dem der Vorgelegeweile (1, 2) bzw. der Zwischenwelle (12) für den Rückwärtsgang zugewandten Ende der Scheibe (7) und dem Lot der Vorgelegewelle (1, 2) bzw. der Zwischenwelle (12) für den Rückwärtsgang in radialer Richtung in etwa 3° beträgt.

6. Einrichtung nach einem der vorangehenden Ansprüche, **dadurch gekennzeichnet , dass** die Kontaktbereiche zwischen der Scheibe (7) und der Verzahnung der Vorgelegewelle (1, 2) bzw. der Zwischenwelle (12) für den Rückwärtsgang in der Nähe des Wälzkreises gelegt sind, so dass die Gleitanteile möglichst gering gehalten werden.

## Claims

1. Device for preventing wobbling of the pick-up gears (3) which are arranged on the main shaft (6) in a transmission with two idler shafts (1, 2), **characterized in that**, for at least one of the pick-up gears, it comprises a washer (7) which is connected on one side to the respective pick-up gear (3) and is supported on the other side on the end side of the toothing system (8) of the idler shafts (1, 2) or of the intermediate shafts (12) for the reverse gears, the respective pick-up gear (3) being pushed against the washer (7) by means of spring force, and the contact faces between the washer (7) and the toothing system of the idler shaft (1, 2) or the intermediate shaft (12) for the reverse gear being of conical configuration.

2. Device according to Claim 1, **characterized in that** the washer (7) is of resilient configuration.

3. Device according to Claim 1, **characterized in that** the washer (7) is connected to the pick-up gear (3) by means of at least one pin (9) which is guided through the pick-up gear (3), the pin (9) pushing the pick-up gear (3) in the direction of the washer (7) via a provided spring (10).

4. Device according to Claim 3, **characterized in that** three pins (9) are provided for fastening the washer to the pick-up gear (3).

5. Device according to one of the preceding claims, **characterized in that** the angle between that end of the washer (7) which faces the idler shaft (1, 2) or the intermediate shaft (12) for the reverse gear and the perpendicular of the idler shaft (1, 2) or the intermediate shaft (12) for the reverse gear is approximately 3° in the radial direction.

6. Device according to one of the preceding claims, **characterized in that** the contact regions between the washer (7) and the toothing system of the idler shaft (1, 2) or the intermediate shaft (12) for the reverse gear are situated in the vicinity of the rolling circle, with the result that the sliding portions are kept as low as possible.

## Revendications

1. Dispositif pour empêcher l'oscillation des pignons totalisateurs (3) disposés sur l'arbre principal (6) dans une boîte de vitesses à deux arbres de renvoi (1, 2), **caractérisé en ce qu'**il comprend, pour au moins l'un des pignons totalisateurs, un disque (7) qui est connecté d'une part au pignon totalisateur respectif (3) et qui s'appuie d'autre part contre le côté frontal de la denture (8) des arbres de renvoi (1, 2) ou des arbres intermédiaires (12) pour les vitesses de marche arrière, le pignon totalisateur respectif (3) étant poussé sous l'action d'un ressort contre le disque (7) et les surfaces de contact entre le disque (7) et la denture de l'arbre de renvoi (1, 2) ou de l'arbre intermédiaire (12) pour la vitesse de marche arrière étant réalisées sous forme conique.

2. Dispositif selon la revendication 1, **caractérisé en ce que** le disque (7) est réalisé de manière élastique.

3. Dispositif selon la revendication 1, **caractérisé en ce que** le disque (7) est connecté au pignon totalisateur (3) au moyen d'au moins un boulon (9) guidé à travers le pignon totalisateur (3), le boulon (9), par le biais d'un ressort prévu (10), poussant le pignon totalisateur (3) dans la direction du disque (7).

4. Dispositif selon la revendication 3, **caractérisé en ce que** l'on prévoit trois boulons (9) pour la fixation du disque au pignon totalisateur (3).

5. Dispositif selon l'une quelconque des revendications précédentes, **caractérisé en ce que** l'angle entre l'extrémité du disque (7) tournée vers l'arbre de renvoi (1, 2) ou l'arbre intermédiaire (12) pour la vitesse de marche arrière et l'aplomb de l'arbre de renvoi (1, 2) ou de l'arbre intermédiaire (12) pour la vitesse de marche arrière dans la direction radiale est d'environ 3°.

6. Dispositif selon l'une quelconque des revendications précédentes, **caractérisé en ce que** les régions de contact entre le disque (7) et la denture de l'arbre de renvoi (1, 2) ou de l'arbre intermédiaire (12) pour la vitesse de marche arrière sont situées à proximité du cercle primitif de sorte que les proportions de glissement soient maintenues aussi faibles que possible.
